# EUROPÄISCHE PATENTSCHRIFT

(11) **EP 2 388 172 B1**
(45) Veröffentlichungstag und Bekanntmachung des Hinweises auf die Patenterteilung: **26.12.2012**
(21) Anmeldenummer: 10163428.5
(22) Anmeldetag: 20.05.2010
(51) Int. Cl.: B61C 17/00, B60T 13/66

(54) **Elektropneumatisches Abschleppmodul für Schienenfahrzeuge**
Electropneumatic towing module for rail vehicles
Module de ramassage électropneumatique pour véhicules ferroviaires

(43) Veröffentlichungstag der Anmeldung: 23.11.2011
(73) Patentinhaber: Siemens Aktiengesellschaft, 80333 München (DE)
(72) Erfinder: Brade, Birgit, 91052 Erlangen (DE)

(56) Entgegenhaltungen:
- GB-A- 2 448 318

## Beschreibung

Die Erfindung betrifft ein Abschleppmodul für Schienenfahrzeuge und ein Schienenfahrzeug mit einem solchen Abschleppmodul.

Bei einem Komplettausfall eines Schienenfahrzeugs muss dieses möglichst schnell abgeschleppt werden, um den ansonsten blockierten Fahrweg schnell wieder frei zu bekommen und den planmäßigen Schienenverkehr wieder aufnehmen zu können. Beim Abschleppen muss die Bremsleistung für den gesamten Zugverband von dem abschleppenden Fahrzeug in der Regel allein aufgebracht werden. Der Abschleppvorgang muss dann insbesondere bei längeren Verbänden mit einer sehr geringen Geschwindigkeit erfolgen, um den jeweils herrschenden Sicherheitsanforderungen gerecht zu werden.

Aus der Praxis ist bekannt, eine elektropneumatischen Bremse, die auch als direkte Bremse bezeichnet wird, durch eine indirekte pneumatische Bremse zu ergänzen. Die indirekte Bremse benötigt zum Erzeugen und zum Steuern des Bremsvorgangs keine elektrische Energie, sondern wird über Druckluft mit Energie versorgt und gesteuert. Die Steuerung der Bremsleitung erfolgt mittels rein pneumatisch wirkender Ventile, die in Abhängigkeit von aufgeprägten Druckänderungen in einer pneumatischen Leitung, die auch als Hauptluftleitung bezeichnet wird, den Druck in den Bremszylindern einstellen. Fällt bei der elektropneumatischen Bremse das komplette elektrische Bordnetz aus, wird die elektropneumatische Bremse pneumatisch isoliert und die Bremswirkung allein über die indirekte Bremse erzielt. Zum Abschleppen wird das abschleppende Fahrzeug mit dem fehlerhaften Fahrzeug pneumatisch verbunden und speist die notwendige Druckluft ein. Mit Hilfe der eingeprägten Druckschwankungen kann das abschleppende Fahrzeug beim Bremsen durch das abgeschleppte Fahrzeug unterstützt werden, so dass der Abschleppvorgang mit einer höheren Geschwindigkeit erfolgen kann. Das Vorsehen einer unterlagerten indirekten Bremse ist jedoch aufwändig und kostenintensiv.

Weiterhin ist aus der Druckschrift GB 2 448 318 A eine tragbare Schnittstelleneinheit zur Herstellung einer Verbindung zwischen einer Lokomotive mit einem pneumatischen Bremssteuerungssystem und einem zweiten Schienenfahrzeug mit einem elektrischen Bremssteuerungssystem bekannt. Diese tragbare Schnittstelleneinheit weist ein Konvertermodul auf, das geeignet ausgebildet ist, einen über eine pneumatische Verbindung von der Lokomotive bereitgestellten Bremsdruck in ein elektrisches Bremssteuerungssignal umzuwandeln, das dem zweiten Schienenfahrzeug bereitgestellt wird.

Aufgabe der Erfindung ist es, ein Schienenfahrzeug mit einer elektrisch ansteuerbaren Fluidbremse bei Ausfall des elektrischen Bordnetzes schnell, kostengünstig und mit erhöhter Sicherheit abschleppen zu können.

Diese Aufgabe wird erfindungsgemäß durch ein Abschleppmodul für ein Schienenfahrzeug mit einem Fluidanschluss zum Anschluss einer Fluiddruckleitung, die zum Führen eines mit Druck beaufschlagten Fluids eingerichtet ist, einem Elektroanschluss zum Anschließen einer mit einer elektrischen Versorgungsspannung beaufschlagten Elektroversorgungsleitung, einer Wandlereinheit, die eingangsseitig mit dem Fluidanschluss verbundenen ist und an einem Wandlerausgang ein dem eingangsseitigen Fluiddruck entsprechendes elektrisches Signal bereitstellt, sowie einer eingangsseitig mit dem Wandlerausgang und dem Elektroanschluss verbundenen Steuerungseinheit, die mittels eines Notbremsausgangs mit einer Notbremssteuerleitung des Schienenfahrzeugs und mittels eines Betriebsbremssignalausgangs mit einer Betriebsbremssignalleitung des Schienenfahrzeugs verbindbar ist, gelöst, bei dem eine zweite Wandlereinheit vorgesehen, die eingangsseitig mit dem Fluidanschluss und ausgangsseitig mit der Steuerungseinheit verbunden ist, wobei die zweite Wandlereinheit ausgangsseitig eine dem eingangsseitigen Fluiddruck entsprechendes zweites elektrisches Signal bereitstellt.

Darüber hinaus wird die Aufgabe erfindungsgemäß durch ein Schienenfahrzeug mit wenigstens einer sich durch das Schienenfahrzeug erstreckenden Fluiddruckleitung, einem Fluidkoppelanschluss zum Verbinden wenigstens einer der Fluiddruckleitungen mit einer Fluiddruckversorgung eines abschleppenden Schienenfahrzeugs, einem Elektrokoppelanschluss zum Verbinden einer Elektroenergieversorgungsleitung mit einer Energieversorgungsleitung des abschleppenden Schienenfahrzeugs, einem Abschleppmodul, das über einen Fluidanschluss beziehungsweise über einen Elektroanschluss mit einer der Fluiddruckleitungen und der Elektroenergieversorgungsleitung der verbunden ist, wobei der Elektroanschluss mit einer Steuerungseinheit des Abschleppmoduls in Wirkverbindung steht und die Steuerungseinheit eingangsseitig mit einer Wandlereinheit verbunden ist, die eingangsseitig an den Fluidanschluss angeschlossen ist und die an einem Wandlerausgang ein dem eingangsseitigen Fluiddruck (P) entsprechendes elektrisches Signal (U) bereitstellt, wobei die Steuerungseinheit ausgangsseitig mit einer sich durch das Schienenfahrzeug erstreckenden Notbremssteuerleitung sowie mit einer Betriebsbremssignalleitung verbunden ist, die sich ebenfalls durch das Schienenfahrzeug hindurch erstreckt, und Bremsmodulen, die eingangsseitig mit wenigstens einer der Fluiddruckleitungen und der Betriebsbremssignalleitung verbunden sind, wobei jedes Bremsmodul ausgangsseitig an Bremsaktuatoren des Schienenfahrzeugs angeschlossen ist, die zum Betätigen und Lösen von Bremsen des Schienenfahrzeugs eingerichtet sind, gelöst, bei dem eine zweite Wandlereinheit vorgesehen, die eingangsseitig mit dem Fluidanschluss und ausgangsseitig mit der Steuerungseinheit verbunden ist, wobei die zweite Wandlereinheit ausgangsseitig eine dem eingangsseitigen Fluiddruck entsprechendes zweites elektrisches Signal bereitstellt.

Erfindungsgemäß ist ein Abschleppmodul für Schienenfahrzeuge bereitgestellt, das beispielsweise pneumatisch erzeugte Steuerungssignale mit Hilfe von zwei Wandlereinheiten redundant in elektrische Signale umwandelt und als Eingangssignale in eine Steuerungseinheit einspeist, so dass die Steuerung der Bremse beim Abschleppen mit einer erhöhten Sicherheit erfolgen kann. Die Steuerungseinheit kann auf einfache Art und Weise, beispielsweise von Hand, sowohl mit der Notbremssteuerleitung als auch über die Betriebsbremssignalleitung, beispielsweise einen seriellen Fahrzeugbus, mit den auf dem abzuschleppenden Schienenfahrzeug ohnehin vorhandenen Bremsgeräten der elektropneumatischen Bremse verbunden werden. In Abhängigkeit der vom abschleppenden Fahrzeug aufgeprägten Druckschwankungen in einer der oder in der Fluiddruckleitung können somit über die Betriebsbremssignalleitung den Bremsgeräten Sollwerte zur Verfügung gestellt werden. Die Bremsgeräte leiten dann einen Bremsvorgang ein, wobei ein bei dem Bremsvorgang erfasster Ist-Wert dem Soll-Wert oder einem aus dem Soll-Wert abgeleiteten angepassten Soll-Wert möglichst entspricht. Mit Hilfe des besagten angepassten Sollwertes ist beispielsweise ein Gleitschutz bereitgestellt und/oder die jeweilige Beladung des Schienenfahrzeugs oder Drehgestells berücksichtigt.

Der Begriff "Bremsgeräte" soll hier alle bei einer Bremsung erforderlichen elektronischen Komponenten umfassen, die für ihre Funktionsfähigkeit mit elektrischer Energie versorgt werden müssen. Insbesondere umfasst ein Bremsgerät wenigstens ein Bremssteuergerät, Magnetventile, sonstige logische Steuereinheiten oder dergleichen.

Das erfindungsgemäße Abschleppmodul weist einen Elektroanschluss auf, der mit einer zweckmäßigen Energieversorgung des abschleppenden Fahrzeugs verbunden werden kann. Der Elektroanschluss stellt entweder direkt oder unter Zwischenschaltung weiterer elektronischer Bauteile wie Umrichter, Steller, Spannungsleiter oder dergleichen, auf die später noch genauer eingegangen wird, eine von der Steuerungseinheit benötigte Versorgungsspannung für die Steuerungseinheit und falls erwünscht für weitere Bauteile bereit. Mit Hilfe der so bereitgestellten Elektroenergie- und Steuersignalversorgung ist die Steuerung oder Regelung der beispielsweise elektropneumatischen Bremse des abgeschleppten Schienenfahrzeugs durch das abschleppende Schienenfahrzeug möglich. Dies setzt natürlich auch voraus, dass das Abschleppmodul auch mit der so genannten Notbremssteuerleitung oder Sicherheitsschleife des Schienenfahrzeugs verbunden ist, die ansonsten, also im spannungsfreien Zustand, für eine fortwährende Schnellbremsung des abzuschleppenden Schienenfahrzeugs und somit für dessen Stillstand sorgen würde. Das Abschleppmodul beaufschlagt die Notbremssteuerleitung mit einer Spannung und ermöglicht so ein Lösen der Bremsen des abzuschleppenden Schienenfahrzeugs.

Zweckmäßigerweise ist eine von Hand betätigbare Unterbrechereinrichtung zum Unterbrechen aller eingehenden und ausgehenden Elektroenergieversorgungs- und Signalleitungen vorgesehen. Mit Hilfe der Unterbrechereinrichtung kann das Abschleppmodul auf einfache Art und Weise von den Komponenten der Bremse bei Normalbetrieb des Schienenfahrzeugs, also beispielsweise der Betriebsbremse, der Sicherheitsschleife und dergleichen, getrennt werden, so dass ein ungestörter Normalbetrieb des Schienenfahrzeugs erfolgen kann. Bei einem Abschleppvorgang wird die Unterbrechereinrichtung beispielsweise von Hand betätigt und das Abschleppmodul mit den Elektroversorgungs- und Signalleitungen des abzuschleppenden Schienenfahrzeugs verbunden.

Zweckmäßigerweise ist die Steuerungseinheit über wenigstens eine so orientierte Diode mit dem Notbremsausgang verbunden, dass ein Stromfluss nur von der Steuerungseinheit zum Notbremsausgang ermöglicht ist. Die eine oder die Vielzahl von Dioden dient in diesem Fall zur Entkopplung des Abschleppmoduls vom üblichen Bremsbetrieb, so dass Störungen in Form von Rückkopplungen vermieden sind.

Vorteilhafterweise steht der Elektroanschluss mit wenigstens einem Betriebsspannungsausgang in Wirkverbindung, an dem eine Betriebsspannung zur Energieversorgung von Bremsgeräten bereitgestellt ist. An einem der Betriebspannungsanschlüsse kann eine sich durch das Schienenfahrzeug erstreckende Bremselektroenergieversorgungsleitung auf einfache Art und Weise angeschlossen werden, die mit den Bremsgeräten des abzuschleppenden Schienenfahrzeugs verbunden ist.

Vorteilhafterweise ist der Elektroanschluss über einen Umrichter mit dem Betriebsspannungsausgang und der Steuerungseinheit verbunden. Gemäß dieser Variante der Erfindung ist das Abschleppmodul auch mit Spannung beauschlagbar, die von der geforderten Versorgungsspannung der Steuerungseinheit oder der Bremsgeräte abweicht.

Zweckmäßigerweise ist der Umrichter ein Gleichspannungssteller. Gleichspannungssteller sind als solche dem Fachmann bekannt, so dass an dieser Stelle auf dessen Topologie nicht genauer eingegangen zu werden braucht. Der Gleichspannungssteller dient zur Umwandlung einer eingangs anliegenden Gleichspannung, beispielsweise einer Gleichspannung von 1000 V, in eine ausgangsseitige Betriebsgleichspannung, die einer im Schienenfahrzeug üblicherweise zur Energieversorgung von Bremssteuerkomponenten verwendeten Spannung entspricht. Die Betriebsgleichspannung liegt beispielsweise bei 110 V.

Hiervon abweichend erfolgt die Energieversorgung des Abschleppmoduls mittel eines Energiespeichers wie beispielsweise einer Batterie. Eine solche Energieversorgung kann beispielsweise direkt durch die Batterieebenen des abschleppenden Fahrzeuges bereitgestellt werden oder über einen externen Wandler oder Umrichter, der eingangsseitig an eine andere Spannungsebene des abschleppenden Fahrzeugs angeschlossen ist.

Vorteilhafterweise verfügt das erfindungsgemäße Abschleppmodul über einen Notbremseingang, der mit der Steuerungseinheit verbunden ist. Ein solcher Notbremseingang ermöglicht das Vorsehen weiterer zusätzlicher Eingriffmöglichkeiten, beispielsweise von Personen, die sich während des Abschleppvorgangs in dem abzuschleppenden Schienenfahrzeug befinden.

Gemäß einer zweckmäßigen Weiterentwicklung des erfindungsgemäßen Schienenfahrzeugs steht der Elektroanschluss des Abschleppmoduls auch mit einer sich durch das Schienenfahrzeug erstreckenden Bremselektroenergieversorgungsleitung zur Energieversorgung von Bremsgeräten in Wirkverbindung. Hierauf wurde bereits im Zusammenhang mit der Beschreibung der Vorteile des erfindungsgemäßen Abschleppmoduls eingegangen. Wie bereits ebenfalls ausgeführt wurde, ist es zweckmäßig, dass der Elektroanschluss über einen Umrichter mit der Bremselektroenergieversorgungsleitung und der Steuerungseinheit verbunden ist.

Vorteilhafterweise sind zwei Fluiddruckleitungen vorgesehen, die sich durch das Schienenfahrzeug hindurch erstrecken und über Ventilmittel miteinander verbindbar sind, wobei eine erste Fluiddruckleitung behälterfrei und mit dem Abschleppmodul verbunden und eine zweite Fluiddruckleitung mit den Bremsmodulen verbunden sind. Schienenfahrzeuge, die lediglich über eine direkte Bremse verfügen, weisen nur eine Fluiddruckleitung auf, die als Hauptbehälterluftleitung bezeichnet wird. Die Hauptbehälterluftleitung ist in der Regel mit Druckbehältern verbunden, die das zum Bremsen notwendige Druckluftvolumen bereitstellen. Die angeschlossenen Druckbehälter verzögern jedoch die pneumatische Steuerung eines Bremsvorgangs, die über Druckänderungen in der besagten Hauptbehälterluftleitung erfolgen würde. Eine Möglichkeit, das Ansprechverhalten der Bremse zu verkürzen, wäre, die mit der Hauptbehälterluftleitung verbundenen Druckbehälter über ein von Hand betätigbares Absperrventil von der Hauptbehälterluftleitung abzuschotten. Dies wäre jedoch insbesondere bei langen Schienenfahrzeugen aufwändig. Aus diesem Grunde ist es vorteilhaft, eine zweite Fluiddruckleitung vorzusehen, die mit den für den Bremsbetrieb notwendigen Druckbehältern direkt verbunden ist und die über Ventilmittel mit einer ersten Fluiddruckleitung verbunden ist. Nur die erste Fluiddruckleitung ist mit der Fluiddruckversorgung des abschleppenden Fahrzeugs verbunden. Beim Abschleppen kann somit die eine mit den Druckbehältern kommunizierende Fluiddruckleitung über die andere erste Fluiddruckleitung mit Fluid versorgt werden, bis die Druckbehälter ausreichend mit Fluid gefüllt sind. Anschließend kann die Regelung der Bremsung über die behälterfreie Fluiddruckleitung erfolgen. Sind zwei Fluiddruckleitungen im erfindungsgemäßen Schienenfahrzeug vorgesehen, ist hier die behälterfreie Fluiddruckleitung als erste Fluiddruckleitung bezeichnet, wohingegen die mit den Druckbehältern verbundene Fluiddruckleitung die zweite Fluiddruckleitung ist. Zweckmäßigerweise ist nur die erste Fluiddruckleitung ist mit dem Fluidkoppelanschluss und somit mit der Druckluftversorgung des anschleppenden Schienenfahrzeugs verbunden.

Gemäß einer diesbezüglich zweckmäßigen Ausgestaltung der Erfindung ist die erste Fluiddruckleitung mit einem elektrisch ansteuerbaren Druckabbauventil verbunden, das durch eine Sicherheitsschleife mit Energie versorgt wird. Die Sicherheitsschleife ist zweckmäßigerweise mit einem Betriebsspannungsausgang des Abschleppmoduls verbunden und wird von dieser fortwährend mit einer Spannung beaufschlagt. Bei Unterbrechung der Spannung wird der Fluiddruck in der ersten Fluiddruckleitung abgebaut, beispielsweise zur Außenatmosphäre hin. Aufgrund des sich hierbei einstellenden Druckabfalls in der ersten Fluiddruckleitung wird dann eine Schnellbremsung über das erfindungsgemäße Abschleppmodul eingeleitet.

Zweckmäßigerweise ist in dem erfindungsgemäßen Schienenfahrzeug wenigstens eine Unterbrechereinheit zum Trennen der Elektroenergieversorgung vorgesehen, mit welcher die Energieversorgung des Druckabbauventils unterbrochen werden kann.

Zweckmäßigerweise sind Entkopplungsdioden zum Entkoppeln des Abschleppmoduls von einer Batterieversorgung des Schienenfahrzeugs sowie von der Notbremssteuerleitung des Schienenfahrzeugs vorgesehen. Die Wirkungsweise der Entkopplungsdioden wurde bereits weiter oben beschrieben.

Das mit Druck beaufschlagte Fluid ist beispielsweise Druckluft.

Weitere zweckmäßige Ausgestaltungen und Vorteile der Erfindung sind Gegenstand der nachfolgenden Beschreibung der Erfindung unter Bezug auf die Figuren der Zeichnung, wobei gleiche Bezugszeichen auf gleich wirkende Bauteile verweisen und wobei
- Figur 1: ein Ausführungsbeispiel eines Schienenfahrzeugs und ein Ausführungsbeispiel eines Abschleppmoduls bei einem Abschleppvorgang zeigt,
- Figur 2: das Abschleppmodul sowie die Signal- und Energieversorgungsleitungen des Schienenfahrzeugs gemäß Figur 1 genauer verdeutlicht,
- Figur 3: ein Schienenfahrzeug mit einer zweiten Fluiddruckleitung in einer schematischen Darstellung zeigt und
- Figur 4: ein weiteres Ausführungsbeispiel eines Abschleppmoduls darstellt, das an Signal- und Elektroenergieversorgungsleitungen eines abgeschleppten Schienenfahrzeugs angeschlossen ist und das erfindungsgemäß zwei Wandlereinheiten aufweist.

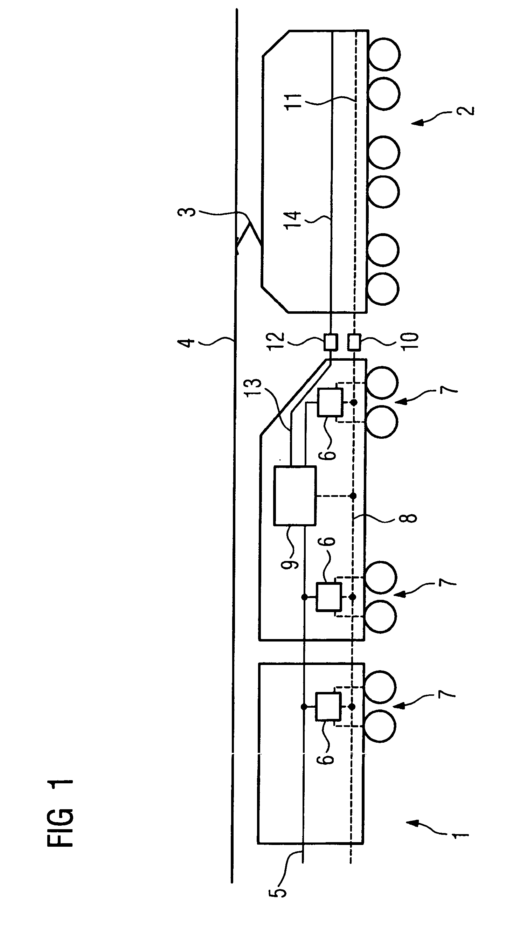

Figur 1 zeigt ein Ausführungsbeispiel eines Schienenfahrzeugs 1, das von einer Lokomotive 2 als abschleppendes Schienenfahrzeug abgeschleppt wird. Ein Stromabnehmer 3 der Lokomotive 2 ist mit einem Elektroenergie bereitstellenden Fahrdraht 4 verbunden. Das Schienenfahrzeug 1 weist hingegen keine eigene Elektroenergieversorgung auf. Das bei Normalbetrieb des Schienenfahrzeugs 1 eingesetzte Bremssystem ist ein elektropneumatisches Bremssystem, bei dem Sollwerte als elektrische Signale über einen seriellen Datenbus 5, mit anderen Worten einer Betriebssignalleitung, an Bremsmodule 6 übertragen werden, die jeweils einem Drehgestell 7 des Schienenfahrzeugs 1 zugeordnet sind. Die modularen Bremssteuerungen 6 sind ferner über eine Hauptbehälterluftleitung 8 mit Druckluft versorgt, wobei über den seriellen Datenbus 5 ansteuerbare Ventile in figürlich nicht dargestellten Bremszylindern in Abhängigkeit der besagten Sollwerte einen Bremsdruck einstellen, der für die gewünschte Bremsverzögerung durch Anpressen von Bremsbelägen an jeweils eine Bremsscheibe sorgt, die drehfest mit einem Rad des Schienenfahrzeugs 1 verbunden ist.

Um die besagte elektropneumatische Bremse des Schienenfahrzeugs 1 auch beim Abschleppen durch die Lokomotive 2 einsetzen zu können, weist das Schienenfahrzeug 1 ein Abschleppmodul 9 auf. Das Abschleppmodul 9 ermöglicht die Energieversorgung der elektronischen Komponenten des elektropneumatischen Bremssystems des Schienenfahrzeugs 1 und darüber hinaus auch die Steuerung des elektropneumatischen Bremssystems durch die abschleppende Lokomotive 2. Die hierbei notwendigen Steuersignale werden pneumatisch auf das abzuschleppende Schienenfahrzeug 1 übertragen und von dem Abschleppmodul 9 in elektrische Steuersignale umgewandelt.

Wie aus Figur 1 erkennbar ist, ist die Hauptbehälterluftleitung 8 des Schienenfahrzeugs 1 über einen Fluidkoppelanschluss 10 mit einer Hauptluftleitung 11 der Lokomotive 2 verbunden. Ferner ist ein Elektrokoppelanschluss 12 an dem Schienenfahrzeug 1 vorgesehen, der ausgangsseitig mit dem Abschleppmodul 9 über eine Elektroversorgungsleitung 13 verbunden ist. Beim Abschleppen, in Figur 1 gezeigt, ist der Elektrokoppelanschluss 12 eingangsseitig mit einer Energieversorgungsleitung 14 der Lokomotive 2 und somit indirekt mit dem Fahrdraht 4 verbunden. Die Energieversorgungsleitung 14 beaufschlagt die Elektroenergieversorgungsleitung 13 mit einer elektrischen Spannung. Der Fluidkoppelanschluss 10 und der Elektrokoppelanschluss 12 sind an dem Schienenfahrzeug 1 angeordnet.

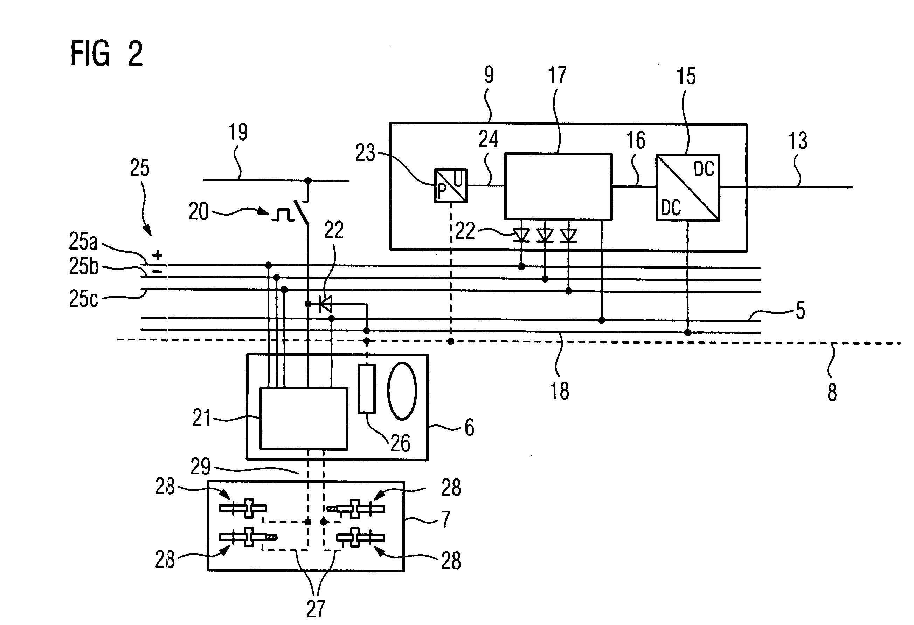

Figur 2 zeigt das Abschleppmodul 9 genauer. Es ist erkennbar, dass die Elektroenergieversorgungsleitung 13 über einen in Figur 2 nicht dargestellten Elektroanschluss mit einem Umrichter 15 verbunden ist, der als Tiefsetzsteller realisiert ist. Der Tiefsetzsteller 15 stellt ausgangsseitig eine Gleichspannung von 110 V als Betriebsspannung bereit, mit der über die Versorgungsleitung 16 eine Steuerungseinheit 17 des Abschleppmoduls 9 eingangsseitig beaufschlagt wird. Darüber hinaus ist der Umrichter 15 ausgangsseitig mit einer Energieversorgungsleitung 18 verbunden, die sich durch das gesamte Schienenfahrzeug 1 hindurch erstreckt und zur Energieversorgung der im Schienenfahrzeug 1 verteilt angeordneten Bremsmodule 6 dient. Alternativ kann die Energie statt über den Tiefsetzsteller 15 auch direkt über die Batteriespannungsebene des abschleppenden Fahrzeugs bereit gestellt werden, die dann die Versorgungsleitungen 16 und 18 direkt speist. Bei Normalbetrieb des Schienenfahrzeugs 1 erfolgt die Energieversorgung der Bremsmodule 6 über eine Batterieversorgungsleitung 19, die über eine Sicherung 20 mit einem Bremsgerät 21 des jeweiligen Bremsmoduls 6 verbunden ist. Um Rückwirkungen der Batterieversorgungsleitung 19 auf das Abschleppmodul 9 zu vermeiden, ist die Energieversorgungsleitung 18 über eine Entkopplungsdiode 22 mit jedem zu versorgenden Bremsgerät 21 verbunden. Auf diese Art und Weise ist die Energieversorgung der über das Schienenfahrzeug 1 verteilten Bremssteuergeräte 21 durch die Lokomotive 2 sichergestellt.

Steuersignale für den jeweils gewünschten Bremsvorgang, insbesondere Sollwerte für die Regelung, werden in der Lokomotive 2 erzeugt und pneumatisch auf das Schienenfahrzeug 1 über die Hauptbehälterleitung 8 übertragen. Das Abschleppmodul 9 verfügt über eine Wandlereinheit 23, die eingangsseitig mit der Hauptbehälterluftleitung 8 verbunden ist. Die Wandlereinheit 23 erzeugt ausgangsseitig eine dem anliegenden pneumatischen Druck P entsprechende elektrische Spannung U und ist ausgangsseitig über eine Signalleitung 24 mit der Steuerungseinheit 17 verbunden. Auf diese Weise werden der Steuerungseinheit 17 die Sollwerte der Lokomotive 2 in Form von elektrischen Signalen zugeführt. Ausgangsseitig ist die Steuerungseinheit 17 mit der ohnehin im Fahrzeug vorhandenen dreisträngigen Notbremssteuerleitung 25 verbunden, die einen positiv unter Spannung stehenden ersten Strang 25a, einen negativ unter Spannung stehenden zweiten Strang 25b sowie einen dritten Strang 25c als Referenzpotential aufweist. Zur Entkopplung der Steuerungseinheit 17 von der Notbremssteuerleitung 25 bei Normalbetrieb dienen wiederum Entkopplungsdioden 22, die so orientiert sind, dass ein Strom- oder Signalfluss lediglich von der Steuereinheit 17 zur Notbremssteuerleitung 25 nicht jedoch in umgekehrter Richtung erfolgen kann. Die Notbremssteuerleitung 25 ist mit jedem ihrer Stränge 25a, b, c mit jedem Bremsgerät 21 der Bremsmodule 6 verbunden. Bricht die der Notbremssteuerleitung 25 von dem Abschleppmodul 9 aufgeprägte Spannung zusammen, löst das Bremsgerät 21 eine Schnellbremsung aus.

Eine Betriebsbremsung wird durch den sich durch das gesamte Schienenfahrzeug 1 hindurch erstreckenden seriellen Datenbus 5 eingeleitet. Hierzu ist die Steuerungseinheit 17 ausgangsseitig mit dem seriellen Datenbus 5 verbunden, der wiederum mit dem Steuerungseingang jedes Bremsgerätes 21 verbunden ist.

Aus Figur 2 ist weiterhin erkennbar, dass jedes Bremsmodul 6 schematisch angedeutete Druckbehälter 26 aufweist, welche mit der Hauptbehälterluftleitung 8 verbunden sind. Auf diese Art und Weise wird jedes Bremsmodul 6 ein zum Bremsen ausreichend großes Volumen an Druckluft bereitgestellt. Weitere pneumatische Komponenten, Behälter, Ventile, Relais und dergleichen sind in Figur 2 lediglich schematisch durch eine Ellipse verdeutlicht.

Die Funktionsweise eines Bremsmoduls 6 einer elektropneumatischen Bremse ist dem Fachmann bestens bekannt, so dass an dieser Stelle eine detaillierte Beschreibung entfallen kann. Wesentlich ist, dass die pneumatischen Komponenten und insbesondere die Druckluftbehälter 26 über elektrisch ansteuerbare Bremsventile und Bremsdruckleitungen 27 mit Bremsaktuatoren 28 verbunden sind, die eine dem Druck der Druckluft entsprechende Bremskraft erzeugen.

Die Wirkungsweise der elektropneumatischen Bremse des Schienenfahrzeugs 1 im Schleppbetrieb erfolgt auf folgende Weise. Eine Betriebsbremsung wird durch das Erzeugen eines entsprechenden pneumatischen Sollwertes in der abschleppenden Lokomotive 2 eingeleitet, der pneumatisch mittels Hauptbehälterleitung 8 auf die Wandlereinheit 23 und schließlich in Form einer elektrischen Spannung U auf die Steuerungseinheit 17 des Abschleppmoduls 9 übertragen wird. Anschließend erzeugt die Steuerungseinheit 17 ausgangsseitig ein dem Sollwert entsprechendes elektrisches Signal, das über den seriellen Datenbus 5 jedem Bremsgerät 21 zugeführt wird. Jedes Bremsgerät 21 verfügt in dem gezeigten Ausführungsbeispiel über einen Gleitschutzrechner. Der Gleitschutzrechner berechnet ausgehend von dem eingangsseitig zur Verfügung stehenden Sollwert einen abgeleiteten Sollwert, so dass ein unerwünschter Schlupf oder ein Gleiten des Schienenrades auf der Schiene weitestgehend vermieden ist. Der abgeleitete Sollwert wird einer nachgeschalteten Regelung zur Verfügung gestellt. Diese erzeugt über die nicht gezeigten elektrisch ansteuerbaren Regel- oder Bremsventile einen Bremsdruck in Bremszylindern der Bremsaktuatoren 28, so dass sich die gewünschte Bremsverzögerung einstellt.

Aufgrund der Spannungsversorgung der Notbremssteuerleitung 25 wird nur im Fehlerfall, also bei Kurzschluss oder Unterbrechung der Notbremssteuerleitung 25, eine Schnellbremsung ausgelöst.

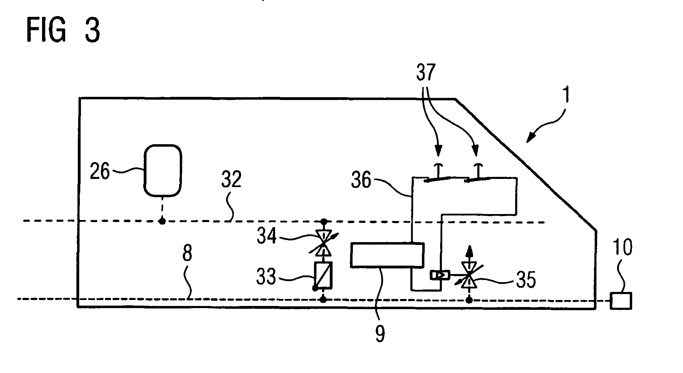

Figur 3 zeigt ein weiteres Ausführungsbeispiel des Schienenfahrzeugs 1, bei dem berücksichtigt ist, dass bei einer einzigen Fluiddruckleitung im Schienenfahrzeug - wie im Falle des Ausführungsbeispiels gemäß Figur 2 - diese zwangsläufig mit Druckluftbehältern 26 verbunden ist, die für eine Zeitverzögerung bei der Übertragung der pneumatischen Steuerungssignale sorgen. Aus diesem Grunde ist in dem in Figur 3 gezeigten Ausführungsbeispiel das Schienenfahrzeug 1 mit einer zweiten Fluiddruckleitung 32 ausgerüstet, die im Folgenden als Hauptbehälterluftleitung 32 bezeichnet wird, wohingegen die erste Fluiddruckleitung in Abweichung vom Ausführungsbeispiel gemäß Figur 2 als Hauptluftleitung 8 bezeichnet wird. Die Hauptbehälterluftleitung 32 ist über ein Rückschlagventil 33 und ein Absperrventil 34 mit der Hauptluftleitung 8 verbunden. Anstelle der Hauptbehälterleitung 32 ist jedoch nur die Hauptluftleitung 8 mit dem Fluidanschluss 10 verbunden und wird von der abschleppenden Lokomotive 2 mit Druckluft versorgt, die bei Entsperren des Absperrventils 34 die Versorgung der Druckbehälter 26 mit Druckluft übernimmt. Die Steuerung der elektropneumatischen Bremse erfolgt jedoch über die Hauptluftleitung 8, die bezüglich der Hauptbehälterluftleitung 32 weniger träge ist und eine dynamischere Regelung ermöglicht.

Die Hauptluftleitung 8 kann über ein Entlüftungsventil 35 als Druckabbauventil schnell entlüftet werden, wobei das Entlüften durch das Unterbrechen einer Sicherheitsschleife 36 in Gang gesetzt wird, über welche die notwendige Energieversorgung bereitgestellt ist, um das Entlüftungsventil 35 geschlossen zu halten. Bei Unterbrechung der Sicherheitsschleife 36, beispielsweise durch Unterbrecherschalter 37, kommt es zu einer Entlüftung der Hauptluftleitung 8 und somit zu einer Schnellbremsung des Schienenfahrzeugs 1 und der Lokomotive 2. In Figur 3 sind die elektrischen Leitungen und die Signalleitungen aus Gründen der Übersichtlichkeit nicht gezeigt.

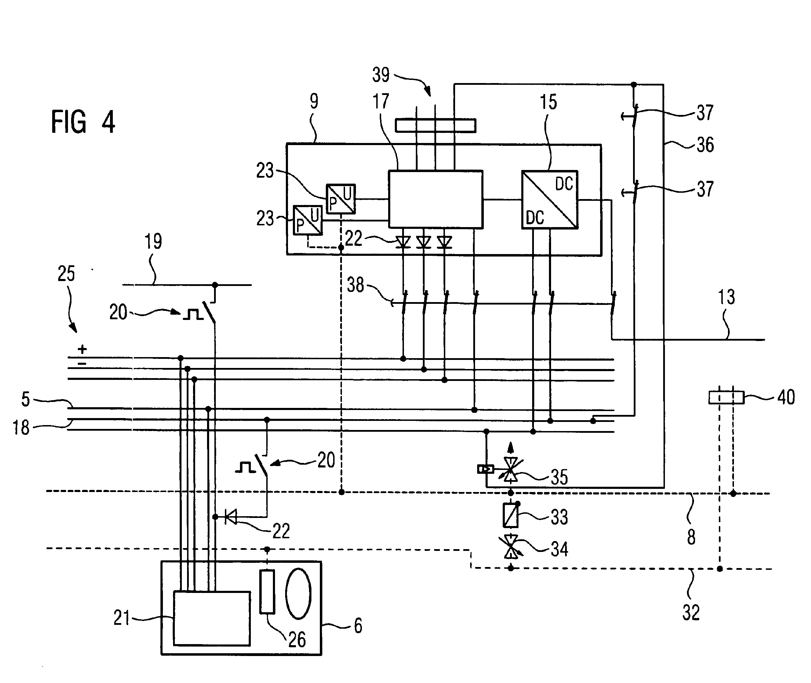

Figur 4 verdeutlicht das Ausführungsbeispiel gemäß Figur 3 einschließlich elektrischer Signalleitungen und elektrischer Versorgungsleitungen. Es ist erkennbar, dass die Hauptbehälterluftleitung 32 zur Druckbeaufschlagung mit den pneumatischen Komponenten und insbesondere den Druckbehältern 26 der Bremsmodule 6 verbunden ist. Die Übertragung der pneumatischen Sollwerte erfolgt jedoch über die Hauptluftleitung 8, die in Abweichung zu dem in Figur 2 gezeigten Ausführungsbeispiel erfindungsgemäß mit zwei Wandlereinheiten 23 verbunden ist, die jeweils den Fluiddruck in der Hauptluftleitung 8 in eine entsprechende Spannung U umwandeln, und diese als elektrische Sollwertsignale der Steuereinheit 17 zur Verfügung stellen. Auf diese Art und Weise ist für eine Redundanz und erhöhte Sicherheit des Bremssystems beim Abschleppen gesorgt.

Darüber hinaus verfügt das Schienenfahrzeug 1 über einen Sicherheitsschalter 38, mit dessen Hilfe die Verbindung der Steuerungseinheit 17 mit der Notbremssteuerleitung 25 die Verbindung der Steuerungseinheit 17 mit dem seriellen Datenbus 5, die Verbindung des Umrichters 15 mit der Bremselektroversorgungsleitung 18, die Elektroenergieversorgung des Entlüftungsventils 35 sowie die Elektroversorgungsleitung 13 für den Normalbetrieb unterbrochen werden kann. Ferner erfolgt die Energieversorgung jeder Bremssteuerung 21 durch den Umrichter 15 ebenfalls über eine Sicherung 20, die vor die Entkopplungsdiode 22 geschaltet ist.

Darüber hinaus weist das Abschleppmodul 9 weitere Eingänge für Notbremseinrichtungen 39 auf. Darüber hinaus ist eine Kupplung 40 für ein Führerbremsventil im Führerstand des Schienenfahrzeugs 1 vorgesehen.

## Patentansprüche

1. Abschleppmodul (9) für ein Schienenfahrzeug (1)
- mit einem Fluidanschluss zum Anschluss einer Fluiddruckleitung (8,32), die zum Führen eines mit Druck beaufschlagten Fluids eingerichtet ist,
- einem Elektroanschluss zum Anschließen einer mit einer elektrischen Versorgungsspannung beaufschlagten Elektroversorgungsleitung (13),
- einer Wandlereinheit (23), die eingangsseitig mit dem Fluidanschluss verbundenen ist und an einem Wandlerausgang ein dem eingangsseitigen Fluiddruck (P) entsprechendes elektrisches Signal (U) bereitstellt,
- und einer eingangsseitig mit dem Wandlerausgang und dem Elektroanschluss verbundenen Steuerungseinheit (17), die mittels eines Notbremsausgangs mit einer Notbremssteuerleitung (25) des Schienenfahrzeugs (1) und mittels eines Betriebsbremssignalausgangs mit einer Betriebsbremssignalleitung (5) des Schienenfahrzeugs (1) verbindbar ist,
**gekennzeichnet durch**
eine zweite Wandlereinheit (23), die eingangsseitig mit dem Fluidanschluss und ausgangsseitig mit der Steuerungseinheit (17) verbunden ist, wobei die zweite Wandlereinheit (23) ausgangsseitig eine dem eingangsseitigen Fluiddruck (P) entsprechendes zweites elektrisches Signal (U) bereitstellt.

2. Abschleppmodul (9) nach Anspruch 1,
**gekennzeichnet durch**
eine von Hand betätigbare Unterbrechereinrichtung (38) zum Unterbrechen aller eingehenden und ausgehenden Elektroversorgungs- und Signalleitungen.

3. Abschleppmodul (9) nach einem der vorhergehenden Ansprüche,
**dadurch gekennzeichnet, dass**
die Steuerungseinheit (17) über wenigstens eine so orientierte Diode (22) mit dem Notbremsausgang verbunden ist, dass ein Stromfluss nur von der Steuerungseinheit (17) zum Notbremsausgang ermöglicht ist.

4. Abschleppmodul (9) nach einem der vorhergehenden Ansprüche,
**dadurch gekennzeichnet, dass**
der Elektroanschluss mit wenigstens einem Betriebsspannungsausgang in Wirkverbindung steht, an dem eine Betriebsspannung zur Energieversorgung von Bremsgeräten (21) bereitgestellt ist.

5. Abschleppmodul (9) nach Anspruch 4,
**dadurch gekennzeichnet, dass**
der Elektroanschluss über einen Umrichter (15) mit dem Betriebsspannungsausgang und mit der Steuerungseinheit (17) verbunden ist.

6. Abschleppmodul (9) nach Anspruch 5,
**dadurch gekennzeichnet, dass**
der Umrichter (15) ein Gleichspannungssteller ist.

7. Abschleppmodul (9) nach einem der vorhergehenden Ansprüche,
**gekennzeichnet durch**
wenigstens einen Notbremseingang (39), der mit der Steuerungseinheit (17) verbunden ist.

8. Schienenfahrzeug (1) mit
- wenigstens einer sich durch das Schienenfahrzeug (1) erstreckenden Fluiddruckleitung (8,32),
- einem Fluidkoppelanschluss (10) zum Verbinden wenigstens einer der Fluiddruckleitungen (8,32) mit einer Fluiddruckversorgung (11) eines abschleppenden Schienenfahrzeugs (2),
- einem Elektrokoppelanschluss (12) zum Verbinden einer Elektroenergieversorgungsleitung (13) mit einer Energieversorgungsleitung (14) des abschleppenden Schienenfahrzeugs (2),
- einem Abschleppmodul (9), das über einen Fluidanschluss beziehungsweise über einen Elektroanschluss mit einer der Fluiddruckleitungen (8, 32) und der Elektroenergieversorgungsleitung (13) der verbunden ist, wobei der Elektroanschluss mit einer Steuerungseinheit (17) des Abschleppmoduls (9) in Wirkverbindung steht und die Steuerungseinheit (17) eingangsseitig mit einer Wandlereinheit (23) verbunden ist, die eingangsseitig an den Fluidanschluss angeschlossen ist und die an einem Wandlerausgang ein dem eingangsseitigen Fluiddruck (P) entsprechendes elektrisches Signal (U) bereitstellt, wobei die Steuerungseinheit (17) ausgangsseitig mit einer sich durch das Schienenfahrzeug (1) erstreckenden Notbremssteuerleitung (25) sowie mit einer Betriebsbremssignalleitung (5) verbunden ist, die sich ebenfalls durch das Schienenfahrzeug (1) hindurch erstreckt, und
- Bremsmodulen (6), die eingangsseitig mit wenigstens einer der Fluiddruckleitungen (8,32) und der Betriebsbremssignalleitung (5) verbunden sind, wobei jedes Bremsmodul (6) ausgangsseitig an Bremsaktuatoren (28) des Schienenfahrzeugs (1) angeschlossen ist, die zum Betätigen und Lösen von Bremsen des Schienenfahrzeugs (1) eingerichtet sind
**gekennzeichnet durch**
eine zweite Wandlereinheit (23), die eingangsseitig mit dem Fluidanschluss und ausgangsseitig mit der Steuerungseinheit (17) verbunden ist, wobei die zweite Wandlereinheit (23) ausgangsseitig eine dem eingangsseitigen Fluiddruck (P) entsprechendes zweites elektrisches Signal (U) bereitstellt.

9. Schienenfahrzeug (1) nach Anspruch 8,
**dadurch gekennzeichnet, dass**
der Elektroanschluss des Abschleppmoduls (9) mit einer sich durch das Schienenfahrzeug (1) erstreckenden Bremselektroenergieversorgungsleitung (18) zur Energieversorgung von Bremsgeräten (21) in Wirkverbindung steht.

10. Schienenfahrzeug nach Anspruch 9, **gekennzeichnet dadurch, dass** der Elektroanschluss über einen Umrichter (15) mit der Bremselektroenergieversorgungsleitung (18) und der Steuerungseinheit (17) verbunden ist.

11. Schienenfahrzeug nach Anspruch 8, 9 oder 10,
**gekennzeichnet durch**
zwei Fluiddruckleitungen (8, 32), die über Ventilmittel (33,34) miteinander verbindbar ist, wobei eine erste Fluiddruckleitung (8) behälterfrei und mit dem Abschleppmodul (9) verbunden und eine zweite Fluiddruckleitung (32) mit den Bremsmodulen (6) verbunden sind.

12. Schienenfahrzeug (1) nach Anspruch 11,
**dadurch gekennzeichnet, dass**
die erste Fluiddruckleitung (8) ein elektrisch ansteuerbares Druckabbauventil (35) aufweist, das über eine geschlossene Sicherheitsschleife (36) mit Energie versorgt ist.

13. Schienenfahrzeug (1) nach Anspruch 12,
**gekennzeichnet durch**
im Schienenfahrzeug verteilte Unterbrechereinheiten (27) zum Trennen der geschlossenen Sicherheitsschleife (36), so dass die Energieversorgung des Druckabbauventils (35) unterbrochen ist und ein Druckabbau in der ersten Fluiddruckleitung (8) erfolgt.

14. Schienenfahrzeug (1) nach einem der Ansprüche 8 bis 13,
**gekennzeichnet durch**
Entkopplungsdioden (22) zum Entkoppeln des Abschleppmoduls (9) von einer Batterieversorgung (19) des Schienenfahrzeugs (1) sowie von der Notbremssteuerleitung (25) des Schienenfahrzeugs (1).

## Claims

1. Towing module (9) for a rail vehicle (1)
- having a fluid connection for connection of a fluid pressure line (8, 32), which is designed to carry a fluid to which pressure is applied,
- having an electrical connection for connection of an electrical supply line (13) to which an electrical supply voltage is applied,
- having a transducer unit (23), which is connected on the input side to the fluid connection and produces an electrical signal (4), which corresponds to the fluid pressure (P) on the input side, at a transducer output,
- and having a control unit (17), which is connected on the input side to the transducer output and to the electrical connection and can be connected by means of an emergency brake output to an emergency brake control line (25) of the rail vehicle (1) and by means of an operating brake signal output to an operating brake signal line (5) of the rail vehicle (1),
**characterized by**
a second transducer unit (23), which is connected on the input side to the fluid connection and on the output side to the control unit (17), with the second transducer unit (23) producing a second electrical signal (4) on the output side, which corresponds to the input-side fluid pressure (P).

2. Towing module (9) according to Claim 1,
**characterized by**
an interrupter device (38), which can be operated manually, for interruption of all the incoming and outgoing electrical supply and signal lines.

3. Towing module (9) according to one of the preceding claims,
**characterized in that**
the control unit (17) is connected to the emergency brake output via at least one diode (22) which is oriented to allow current to flow only from the control unit (17) to the emergency brake output.

4. Towing module (9) according to one of the preceding claims,
**characterized in that**
the electrical connection is operatively connected to at least one operating voltage output, at which an operating voltage is produced for supplying power to braking appliances (21).

5. Towing module (9) according to Claim 4,
**characterized in that**
the electrical connection is connected via a converter (15) to the operating voltage output and to the control unit (17).

6. Towing module (9) according to Claim 5,
**characterized in that**
the converter (15) is a DC voltage controller.

7. Towing module (9) according to one of the preceding claims,
**characterized by**
at least one emergency brake input (39), which is connected to the control unit (17).

8. Rail vehicle (1) having
- at least one fluid pressure line (8, 32) which extends through the rail vehicle (1),
- a fluid coupling connection (10) for connection of at least one of the fluid pressure lines (8, 32) to a fluid pressure supply (11) of a towing rail vehicle (2),
- an electrical coupling connection (12) for connection of an electrical power supply line (13) to a power supply line (14) in the towing rail vehicle (2),
- a towing module (9), which is connected via a fluid connection and via an electrical connection to one of the fluid pressure lines (8, 32) and to the electrical power supply line (13), with the electrical connection being operatively connected to a control unit (17) in the towing module (9), and with the control unit (17) being connected on the input side to a transducer unit (23) which is connected on the input side to the fluid connection and which produces an electrical signal (U), which corresponds to the fluid pressure (P) on the input side, at a transducer output, with the control unit (17) being connected on the output side to an emergency brake control line (25), which extends through the rail vehicle (1), and to an operating brake signal line (5), which likewise extends through the rail vehicle (1), and
- brake modules (6), which are connected on the input side to at least one of the fluid pressure lines (8, 32) and to the operating brake signal line (5), with each brake module (6) being connected on the output side to brake actuators (28) in the rail vehicle (1), which are designed to operate and release brakes in the rail vehicle (1),
**characterized by**
a second transducer unit (23), which is connected on the input side to the fluid connection and on the output side to the control unit (17), with the second transducer unit (23) producing a second electrical signal (U) on the output side, which corresponds to the input-side fluid pressure (P).

9. Rail vehicle (1) according to Claim 8,
**characterized in that**
the electrical connection of the towing module (9) is operatively connected to a brake electrical power supply line (18), which extends through the rail vehicle (1), in order to supply power to braking appliances (21).

10. Rail vehicle according to Claim 9,
**characterized in that**
the electrical connection is connected via a converter (15) to the brake electrical power supply line (18) and to the control unit (17).

11. Rail vehicle according to Claim 8, 9 or 10,
**characterized by**
two fluid pressure lines (8, 32) which can be connected to one another via valve means (33, 34), with a first fluid pressure line (8) having no reservoir and being connected to the towing module (9), and with a second fluid pressure line (32) being connected to the brake modules (6).

12. Rail vehicle (1) according to Claim 11,
**characterized in that**
the first fluid pressure line (8) has a pressure reducing valve (35) which can be operated electrically and is supplied with power via a closed safety loop (36).

13. Rail vehicle (1) according to Claim 12,
**characterized by**
interrupter units (27), which are distributed in the rail vehicle, for disconnection of the closed safety loop (36), such that the power supply for the pressure reducing valve (35) is interrupted, and the pressure in the first fluid pressure line (8) is reduced.

14. Rail vehicle (1) according to one of Claims 8 to 13,
**characterized by**
decoupling diodes (22) for decoupling the towing module (9) from a battery supply (19) in the rail vehicle (1), and from the emergency brake control line (25) in the rail vehicle (1).

## Revendications

1. Module ( 9 ) de remorquage d'un véhicule ( 1 ) ferroviaire,
- comprenant un raccord pour du fluide pour raccorder un conduit ( 8, 32 ) sous pression pour du fluide, qui est conçu pour conduire un fluide soumis à une pression,
- une borne électrique pour raccorder une ligne ( 13 ) d'alimentation électrique alimentée en une tension d'alimentation électrique,
- une unité ( 23 ) formant transducteur, qui est reliée du côté de l'entrée au raccord pour du fluide et qui met à disposition à une sortie du transducteur un signal ( U ) électrique correspondant à la pression ( P ) du fluide du côté de l'entrée,
- et une unité ( 17 ) de commande, qui est reliée du côté de l'entrée à la sortie du transducteur et à la borne électrique et qui peut, au moyen d'une sortie d'urgence, être reliée à une ligne ( 25 ) de commande de frein d'urgence du véhicule ferroviaire et, au moyen d'une sortie de signal de frein de service, à une ligne ( 5 ) de signal de frein de service du véhicule ( 1 ) ferroviaire,
**caractérisé par**
une deuxième unité ( 23 ) formant transducteur, qui est reliée du côté de l'entrée au raccord pour du fluide et du côté de la sortie à l'unité ( 17 ) de commande, la deuxième unité ( 23 ) formant transducteur mettant à disposition du côté de la sortie un deuxième signal ( U ) électrique correspondant à la pression ( P ) du fluide du côté de l'entrée.

2. Module ( 9 ) de remorquage suivant la revendication 1,
**caractérisé par**
un dispositif ( 38 ) interrupteur pouvant être actionné à la main pour interrompre toutes les lignes d'alimentation électrique et de signal entrant et partant.

3. Module ( 9 ) de remorquage suivant l'une des revendications précédentes,
**caractérisé en ce que** l'unité ( 17 ) de commande est reliée à la sortie de frein d'urgence par au moins une diode ( 22 ) orientée da manière à ne permettre un flux de courant que de l'unité ( 17 ) de commande à la sortie de frein d'urgence.

4. Module ( 9 ) de remorquage suivant l'une des revendications précédentes,
**caractérisé en ce que** la borne électrique coopère avec au moins une sortie de tension de service, à laquelle est mise à disposition une tension de service pour l'alimentation en courant d'appareils ( 21 ) de frein.

5. Module ( 9 ) de remorquage suivant la revendication 4,
**caractérisé en ce que** la borne électrique est reliée par un convertisseur ( 15 ) à la sortie de tension de service et à l'unité ( 17 ) de commande.

6. Module ( 9 ) de remorquage suivant la revendication 5,
**caractérisé en ce que** le convertisseur ( 15 ) est un régleur de tension continue.

7. Module ( 9 ) de remorquage suivant l'une des revendications précédentes,
**caractérisé par**
au moins une entrée ( 39 ) de frein d'urgence, qui est reliée à l'unité ( 17 ) de commande.

8. Véhicule ( 1 ) ferroviaire, comprenant
- au moins un conduit ( 8, 32 ) sous pression de fluide s'étendant dans le véhicule **(** 1 ) ferroviaire,
- un raccord **(** 10 ) de couplage de fluide pour la liaison d'au moins l'un des conduits ( 8, 32 ) sous pression de fluide à une alimentation ( 11 ) en pression de fluide d'un véhicule ( 2 ) ferroviaire remorqueur,
- une borne ( 12 ) électrique de couplage pour la liaison d'une ligne ( 13 ) d'alimentation en énergie électrique à une ligne ( 14 ) d'alimentation en énergie du véhicule ( 2 ) ferroviaire remorqueur,
- un module ( 9 ) de remorquage, qui est relié par un raccord pour du fluide ou par une borne électrique à l'un des conduits ( 8, 32 ) sous pression de fluide et de la ligne ( 13 ) d'alimentation en énergie électrique, la borne électrique étant en liaison avec une unité ( 17 ) de commande du module ( 9 ) de remorquage et l'unité ( 17 ) de commande étant reliée du côté de l'entrée à une unité ( 23 ) formant transducteur, qui est raccordée du côté de l'entrée à la borne pour du fluide et qui met à disposition à la sortie du transducteur un signal ( U ) électrique correspondant à la pression ( P ) du fluide du côté de l'entrée, l'unité ( 17 ) de commande étant reliée du côté de la sortie à une ligne ( 25 ) de commande de frein d'urgence s'étendant dans le véhicule ( 1 ) ferroviaire, ainsi qu'à une ligne ( 5 ) de signal de frein de service, qui s'étend également dans le véhicule ( 1 ) ferroviaire, et
- des modules ( 6 ) de frein, qui sont reliés du côté de l'entrée à au moins l'un des conduits ( 8, 32 ) sous pression de fluide et à la ligne ( 5 ) de signal de frein de service, chaque module ( 6 ) de frein étant raccordé du côté de la sortie à des actionneurs ( 28 ) de frein du véhicule ferroviaire, qui sont conçus pour serrer et desserrer des freins du véhicule ( 1 ) ferroviaire,
**caractérisé par**
une deuxième unité ( 23 ) formant transducteur, qui est reliée du côté de l'entrée au raccord pour du fluide et du côté de la sortie à l'unité ( 17 ) de commande, la deuxième unité ( 23 ) formant conducteur mettant à disposition du côté de la sortie un deuxième signal ( U ) électrique correspondant à la pression ( P ) du fluide du côté de l'entrée.

9. Véhicule ( 1 ) ferroviaire suivant la revendication 8,
**caractérisé en ce que** la borne électrique du module ( 9 ) de remorquage est, pour l'alimentation en courant d'appareils ( 21 ) de frein, en liaison fonctionnelle avec une ligne ( 18 ) d'alimentation en énergie électrique de frein s'étendant dans le véhicule ( 1 ) ferroviaire.

10. Véhicule ( 1 ) ferroviaire suivant la revendication 9,
**caractérisé en ce que** la borne électrique est reliée par un convertisseur ( 15 ) à la ligne ( 18 ) d'alimentation en énergie électrique de frein et à l'unité ( 17 ) de commande.

11. Véhicule ( 1 ) ferroviaire suivant la revendication 8, 9 ou 10,
**caractérisé par**
deux conduits ( 8, 32 ) sous pression de fluide, qui peuvent être reliés entre eux par des moyens ( 33, 34 ) de vanne, un premier conduit ( 8 ) sous pression de fluide étant sans récipient et étant relié au module ( 9 ) de remorquage et un deuxième conduits ( 32 ) sous pression de fluide étant relié aux modules ( 6 ) de frein.

12. Véhicule ( 1 ) ferroviaire suivant la revendication 11,
**caractérisé en ce que** le premier conduit ( 8 ) sous pression de fluide a une vanne ( 35 ) de détente de la pression, qui peut être commandée électriquement et qui est alimentée en énergie par une boucle ( 36 ) de sécurité fermée.

13. Véhicule ( 1 ) ferroviaire suivant la revendication 12,
**caractérisé en ce qu'**il est prévu des unités ( 27 ) d'interrupteur réparties dans le véhicule ferroviaire pour la séparation de la boucle ( 36 ) de sécurité fermée de manière à ce que l'alimentation en énergie de la vanne ( 35 ) de détente de la pression soit interrompue et de manière à effectuer une détente de la pression dans le premier conduit ( 8 ) sous pression de fluide.

14. Véhicule ( 1 ) ferroviaire suivant l'une des revendications 8 à 13,
**caractérisé par** des diodes ( 22 ) de découplage pour le découplage du module ( 9 ) de remorquage d'une alimentation ( 19 ) par batterie du véhicule ( 1 ) ferroviaire, ainsi que de la ligne ( 25 ) de commande de frein d'urgence du véhicule ( 1 ) ferroviaire.
